Europäisches Patentamt

European Patent Office

Office européen des brevets

(19)

(11) Publication number: **0 132 917**
A1

(12) **EUROPEAN PATENT APPLICATION**

(21) Application number: **84303468.7**

(22) Date of filing: **22.05.84**

(51) Int. Cl.⁴: **G 11 B 23/06**

(30) Priority: **26.05.83 GB 8314559**

(43) Date of publication of application:
**13.02.85 Bulletin 85/7**

(84) Designated Contracting States:
**AT BE CH DE FR GB IT LI LU NL SE**

(71) Applicant: **SINCLAIR RESEARCH LIMITED**
**25 Willis Road**
**Cambridge CB1 2AQ(GB)**

(72) Inventor: **Southward, David Conner**
**The Old Thatch 60 Denmark Road**
**Cottenham Cambridge, CB4 4QF(GB)**

(74) Representative: **Abbott, David John et al,**
**Abel & Imray Northumberland House 303-306 High**
**Holborn**
**London, WC1V 7LH(GB)**

(54) **Improved continuous loop tape cassette.**

(57) A continuous loop cassette (10) includes a reel (12) within a casing (11) from which tape (13) is unwound to form a loop which is rewound on to the reel (12), and openings (14), (15) in different edges of the casing for engagement with tape head and capstan of reproducing equipment.

FIG.1.

Croydon Printing Company Ltd.

# IMPROVED CONTINUOUS LOOP

## TAPE CASSETTE

The present invention relates to continuous loop tape cassettes, particularly but not exclusively for use in data storage applications.

Continuous loop tape cassettes as described in U.S. Patent No. 4,013,239, for example, form particularly convenient storage means for serially input and output data, for example for programs usable in microcomputers since in the operation of data storage apparatus employing continuous loop tape cassettes, data retrieval is effected by running the tape and awaiting recognition of the program name or code as identified by the "load" instruction say.

The simplicity of using data storage apparatus employing continuous loop tape cassettes with data processing apparatus such as a microcomputer has not been exploited because of the relatively poor performance of known continuous loop tape cassettes as regards the data storage available for the size of the cassette.

The present invention provides a continuous loop tape cassette with improved performance over known cassettes as regards available data storage for cassette size.

In accordance with the present invention, a continuous loop tape cassette includes a casing, a continuous reel of tape mounted for rotation within the casing, means guiding tape in a loop from the reel and back to the reel in a manner permitting continuous unwinding of tape from the reel and rewinding of tape on the reel, a first opening in one edge of the casing exposing the tape loop for engagement with a tape head, and a second opening in a different edge of the casing exposing the tape loop for engagement with drive means for transporting the tape.

Preferably, the first and second openings occur in adjacent edges of the casing.

Preferably, the reel of tape is located generally along the centre line of the first opening.

In an embodiment of the invention, the tape is guided past the first opening by means of a guide post located at one corner of the casing and a pinch roller located at an adjacent corner of the casing.

Preferably, a pressure pad is included at the first opening for urging the tape against a tape head when the cassette is positioned in data recording and playback apparatus.

Preferably, the continuous loop tape cassette includes formations on its casing for releasable engagement with corresponding formations on operating or storage means.

The present invention will now be described by way of example only, and with reference to the accompanying drawings, in which:-

Figure 1 shows a partially sectional representation of a cassette in accordance with the invention , illustrating the lower part of the casing, with important features of the upper part shown in broken lines; and

Figure 2 is a plan view representation of the cassette shown in Figure 1, illustrating its profile.

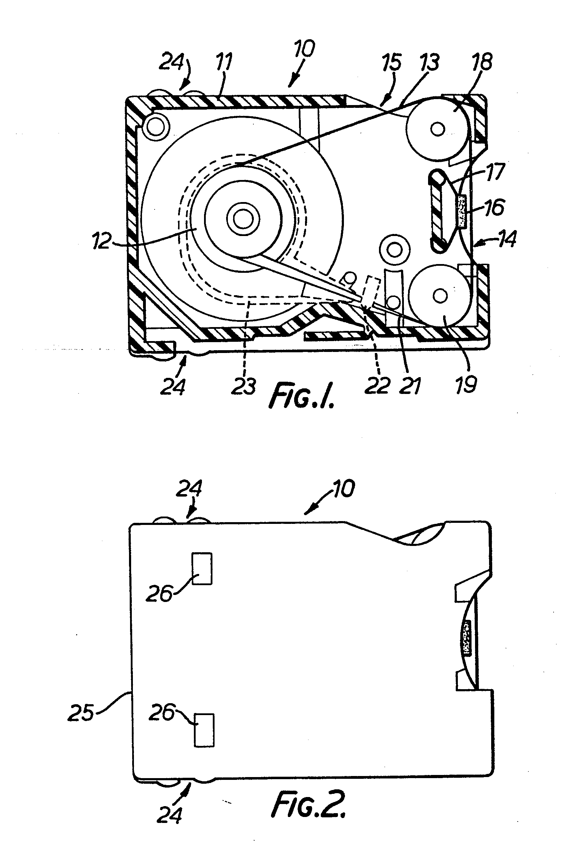

Referring to Figure 1, a continuous loop tape cassette 10 includes a lower casing portion 11 with provision for receiving a reel 12 of tape 13. Two openings 14 15 are provided in different sides of the cassette, exposing respective parts of the tape, one opening 14 being for engagement of the tape 13 by a recording/reproducing head (not shown) of recording/playback equipment, and the other opening 15 for engagement of the tape 13 by a capstan (not shown) so as to drive the tape. The opening 14 includes a pressure pad 16 held by a resilient member 17 against which the head is to press, and the opening 15 has aligned therewith a roller 18 which is arranged for the capstan to press against, so as to act as a pinch roller. The pinch roller 18 is rotatable and is positioned in one corner of the cassette 10 and a guide post 19 is positioned  in the corner on the opposite side of the opening 14. The tape 13 is threaded from the centre of the reel 12 around the guide post 19, past the pressure pad 16, around the pinch roller 18 and back to the reel 12. Two formations 21 and 22 serve to untwist the tape (which has been twisted through 90$^\circ$ as explained below) for proper alignment with the guide post 19.

The tape 13 from the centre of the reel 12 is fed out and twisted through 90$^\circ$ to emerge from the centre in a plane parallel to the major surfaces of the cassette 10. A suitably profiled and recessed surface, shown by the dotted line 23, is provided in the upper portion of the casing (not shown), and allows the twisted portion of the tape to clear the reel 12 to avoid such contact as would lead to the reel jamming and possibly the tape breaking.

Lugs 24 are provided on the outside surfaces of the cassette 10 and may be used to assist retention of the cassette by the tape transport mechanism of data recording and playback apparatus.

As shown in Fig. 1, the reel 12 is positioned symmetrically with respect to the guide post 19 and the pinch roller 18. The distance between the guide post 19 and the pinch roller 18, which distance dictates the length of one edge of the cassette, represents a minimum distance required to permit exposure of an adequate length of tape to a reading head. The reel 12 is rotatable.

In operation, the cassette is inserted into recording and playback apparatus, the preferred insertion direction being towards the right as illustrated in Figure 1, i.e. so that the pressure pad 16 (and the tape in front of the pad) is pushed towards and ultimately into contact with a suitably disposed tape head in the apparatus. At the same time, a capstan or other drive arrangement is brought resiliently into engagement from a sidewards direction with the pinch roller 18, so as to sandwich the tape in between. The capstan may be mounted on a spring-biassed arrangement to provide a force against the pinch roller 18 upon insertion of the cassette, the cassette may be spring biassed towards the capstan or a mechanical system may be provided to direct the capstan appropriately after insertion of the cassette. When the cassette has been pushed far enough in for proper engagement with the head and the capstan, the lugs 24 may engage with suitable retaining means in the apparatus. Alternatively the pressure of the capstan may retain the cassette against suitable stops.

When the drive capstan rotates, the tape 13 is drawn in an anticlockwise direction from the reel 12, via the untwisting formations 21, 22, the guide post 19, past the head and pressure pad 16. Transported tape is drawn back on to the outside of the reel 12 as it rotates.

Fig. 2 shows the upper portion of the casing as including projections 26 for engagement with corresponding projections or recesses in a sleeve for storing the cassette.

The present invention provides a continuous loop tape cassette which is considerably more compact than previously proposed arrangements. The more compact arrangement may provide improved performance in terms of operating rate, particularly acceleration and deceleration, because of reduced inertia. In addition, the arrangement reduces the maximum length of unsupported tape, with benefit relating to operating speed.

Claims:

1. A continuous loop tape cassette including a casing, a continuous reel of tape mounted for rotation within the casing, means guiding the tape in a loop from the reel and back to the reel in a manner permitting continuous unwinding of tape from the reel and rewinding of tape on the reel, a first opening in one edge of the casing exposing the tape loop for engagement with a tape head, and a second opening in a different edge of the casing exposing the tape loop for engagement with drive means for transporting the tape.

2. A continuous loop tape cassette, as claimed in claim 1, wherein the first and second openings occur in adjacent edges of the casing.

3. A continuous loop tape cassette, as claimed in claim 1 or claim 2, wherein the reel of tape is located generally along the centre line of the first opening.

4. A continuous loop tape cassette, as claimed in any one of the preceding claims, wherein the tape is guided past the first opening by means of a guide post located at one corner of the casing and a pinch roller located at an adjacent corner of the casing.

5. A continuous loop tape cassette, as claimed in any one of the preceding claims, including a pressure pad at the first opening for urging the tape against a tape head when the cassette is positioned in data recording and playback apparatus.

6.  A continuous loop tape cassette, as claimed in any one of the preceding claims, including formations on its casing for releasable engagement with corresponding formations on operating or storage means.

*Fig.I.*

*Fig.2.*

European Patent
Office

**EUROPEAN SEARCH REPORT**

0132917
Application number

EP    84 30 3468

## DOCUMENTS CONSIDERED TO BE RELEVANT

| Category | Citation of document with indication, where appropriate, of relevant passages | Relevant to claim | CLASSIFICATION OF THE APPLICATION (Int. Cl ³) |
|---|---|---|---|
| Y | US-A-4 301 976  (G.A. MATTSON) <br> * Column 1, lines 56-68; figure 1 * | 1 | G 11 B   23/06 |
| A | | 5 | |
| Y,A | Patent Abstracts of Japan vol. 1, no. 94, 27 August 1977 page 2559E77 & JP-A-52-28310 | 1,2,4 | |
| A | US-A-3 265 817  (S. GILMAN) <br> * Figure 1 * | 1 | |
| A | US-A-3 971 523  (M. ISHII) <br> * Column  9, lines 34-51; figure 10A * | 3,6 | |
| A | US-A-3 439 880  (P.A. MORRISSETTE) <br> * Figure 1 * | | **TECHNICAL FIELDS SEARCHED (Int. Cl. ³)** <br><br> G 11 B   23/00 <br> G 11 B   15/18 |
| D,A | US-A-4 013 239  (P.R. BESWICK et al.) | | |

The present search report has been drawn up for all claims

| Place of search <br> BERLIN | Date of completion of the search <br> 22-08-1984 | Examiner <br> ROGNONI M.G.L. |
|---|---|---|